# EUROPEAN PATENT SPECIFICATION

(11) **EP 3 953 783 B1**
(45) Date of publication and mention of the grant of the patent: **03.07.2024**
(21) Application number: 20788144.2
(22) Date of filing: 30.03.2020
(51) Int. Cl.: G05D 1/00, A01D 34/00

(54) **SYSTEM AND METHOD FOR SIGNAL RECEPTION FOR A ROBOTIC WORK TOOL**
SYSTEM UND VERFAHREN ZUM SIGNALEMPFANG FÜR EIN ROBOTISCHES ARBEITSWERKZEUG
SYSTÈME ET PROCÉDÉ DE RÉCEPTION DE SIGNAL D'OUTIL DE TRAVAIL ROBOTISÉ

(30) Priority: 09.04.2019 SE 1950441
(43) Date of publication of application: 16.02.2022
(73) Proprietor: HUSQVARNA AB, 561 82 Huskvarna (SE)
(72) Inventor: ROGÖ, Johan, 566 36 HABO (SE); BERGENHOLM, Magnus, 57895 FLISBY (SE); HOLGERSSON, Jonas, 561 40 HUSKVARNA (SE); JOELSSON, Martin, 566 33 HABO (SE)
(86) International application number: PCT/SE2020/050325
(87) International publication number: WO 2020/209773

(56) References cited:
- EP-A1- 2 939 514
- EP-A1- 3 316 443
- EP-A1- 3 413 090
- WO-A1-2016/102141
- WO-A1-2017/123137
- US-A1- 2006 045 679
- US-A1- 2017 269 586
- US-A1- 2017 347 521
- US-A1- 2017 357 006
- US-A1- 2018 364 735

## Description

### TECHNICAL FIELD

This application relates to robotic work tools and in particular to a system and a method for performing improved signal reception to be performed by a robotic work tool, such as a lawnmower.

### BACKGROUND

Automated or robotic power tools such as robotic lawnmowers are becoming increasingly more popular. In a typical deployment a work area, such as a garden, is enclosed by a boundary cable with the purpose of keeping the robotic lawnmower inside the work area.

Additionally or alternatively, the robotic work tool may be arranged to navigate using one or more beacons, such as Ultra Wide Band beacons, or optical beacons.

The robotic work tool is typically arranged with one or more sensors adapted to sense the relevant control signal. The control signal may be transmitted through the boundary cable in which case the sensor(s) is a magnetic field sensor. Alternatively or additionally, the control signal is transmitted through the beacons, in which case the sensor is a beacon receiver.

To avoid or reduce the risk of the robotic work tool escaping the intended work area, there are various safety standards issued that a robotic work tool must fulfill. Two examples of such standards for robotic lawnmowers are the International and European safety standards for robotic lawnmowers IEC 60335-2-107 and EN 50636-2-107 respectively.

According to these standards a robotic lawnmower must cease operation if a signal is lost. For robotic lawnmowers utilizing a more complex control signal, such as a CDMA (Code Division Multiple Access) coded signal, the standards apply to situations when synchronization with the signal is lost.

As the safety standards indicate that if the control signal is lost, the robotic lawnmower is not allowed to continue its movement and must turn off the grass cutting device.

As a consequence, the robotic lawnmower may get stuck in that position requiring an operator to approach the robotic lawnmower and manually reset the robotic lawnmower. This is of course annoying to a user and will decrease the efficiency of the robotic lawnmower.

The patent document published as EP2939514A1 discloses a a lawn mower robot and a control method thereof. The lawn mower robot includes a boundary indication unit including a boundary wire defining a work area and a main body moving within the work area defined by the boundary wire, the main body includes sensing units sensing voltage values induced by the boundary wire and a controller determining a distance between the main body and the boundary wire from the voltage values sensed by the sensing units, each of the sensing units includes at least two coils differently installed, and the two coils respectively sense voltage values within the same area defined by the boundary wire.

The patent document published as WO2016102141A1 discloses a robotic work tool system, comprising a robotic work tool, said robotic work tool comprising a position determining device for determining a current position and at least one deduced reckoning (also known as dead reckoning) navigation sensor, the robotic work tool being configured to determine that a reliable and accurate current position is possible to determine and in response thereto determine an expected navigation parameter, compare the expected navigation parameter to a current navigation parameter to determine a navigation error, determine if the navigation error is negligible, and if the navigation error is not negligible, cause the robotic work tool to change its trajectory to accommodate for the navigation error. Wherein the robotic work tool (100) is further configured to change the trajectory by aligning the trajectory with an expected trajectory, wherein the expected trajectory is determined as an expected direction originating from an expected position and wherein the robotic work tool is configured to change the trajectory by returning to a position that should have been visited and aligning the trajectory with the expected direction originating from the expected position, said position that should have been visited being aligned with the expected direction originating from the expected position.

Thus, there is a need for improved reception of the control signal for a robotic work tool, such as a robotic lawnmower.

### SUMMARY

As will be disclosed in detail in the detailed description, the inventors have realized that a robotic work tool may lose the control signal even though the signal is being transmitted as intended. As work areas may be of different shapes and robotic work tools are usually arranged to operate in a semi-random manner, there may be situations where the robotic work tool has maneuvered into a position where the signal (or synchronization to the signal) is lost. The risk of this happening is increased in that work areas, such as gardens, often constitute dynamic work environment in that people or animals may occupy the work area simultaneous, whereby the robotic work tool may be pushed or other influenced into such a position. This may occur if the robotic work tool is positioned in such a manner that in that position, the signal may not be reliable received or retained. One such example situation is when all sensors are in a polarity reversal area just above a cable, such as a boundary cable, through which an electric current, such as a control signal, passes generating an magnetic field having a positive polarity on one side of the cable, and a negative polarity on the other side of the cable. Another such example is if a beacon signal is blocked by an obstacle.

It is therefore an object of the teachings of this application to overcome or at least reduce those problems by providing a robotic work tool comprising at least one body part and at least one navigation sensor being configured to receive a control signal, wherein at least one of the at least one navigation sensor is arranged on the at least one body part, the robotic work tool being configured to determine that said control signal is not reliably received and in response thereto rotate at least one of the at least one body part comprising at least one of the at least one navigation sensor in a first direction to attempt to regain reliable reception of the control signal as per the appended claims.

In one embodiment the robotic work tool is a robotic lawnmower.

It is also an object of the teachings of this application to overcome the problems by providing a method for use in a robotic work tool comprising at least one body part and at least one navigation sensor being configured to receive a control signal, wherein at least one of the at least one navigation sensor is arranged on the at least one body part, the method comprising determining that said control signal is not reliably received and in response thereto rotating at least one of the at least one body part comprising at least one of the at least one navigation sensor in a first direction to attempt to regain reliable reception of the control signal.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic lawnmower according to one embodiment of the teachings herein;
Figure 1B shows a schematic view of the components of an example of a robotic work tool being a robotic lawnmower according to an example embodiment of the teachings herein;
Figure 1C shows a schematic view of the components of an example of a robotic work tool;
Figure 2 shows an example of a robotic work tool system being a robotic lawnmower system according to an example embodiment of the teachings herein;
Figure 3 shows a schematic view of a cable and a magnetic field and how the direction of the magnetic field depends on the direction of a signal as it is transmitted through the cable;
Figure 4 shows a graph of the amplitude of the magnetic field as it depends on the distance to the cable;
Figure 5A shows a schematic view of a robotic work tool being a robotic lawnmower in an example problem solution according to an example embodiment of the teachings hereir Figures 5B, 5C each shows a schematic view of a robotic working tool;
Figure 6A shows a schematic view of a robotic work tool being a robotic lawnmower overcoming an example problem solution according to an example embodiment of the teachings herein; Figures 6B, 6C each shows a schematic view of a robotic working tool;
Figure 7 shows a schematic view of a robotic work tool being a robotic lawnmower for determining a manner of maneuvering according to an example embodiment of the teachings herein; and
Figure 8 shows a corresponding flowchart for a method according to an example embodiment of the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein. Like reference numbers refer to like elements throughout.

It should be noted that even though the description given herein will be focused on robotic lawnmowers, the teachings herein may also be applied to, robotic ball collectors, robotic mine sweepers, robotic farming equipment, or other robotic work tools where lift detection is used and where the robotic work tool is susceptible to dust, dirt or other debris.

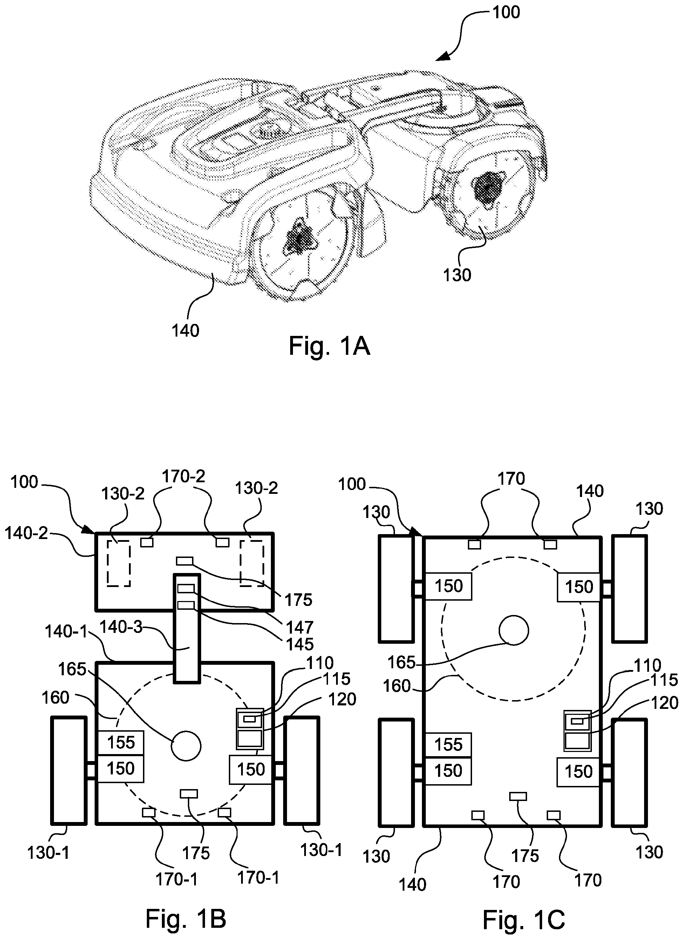

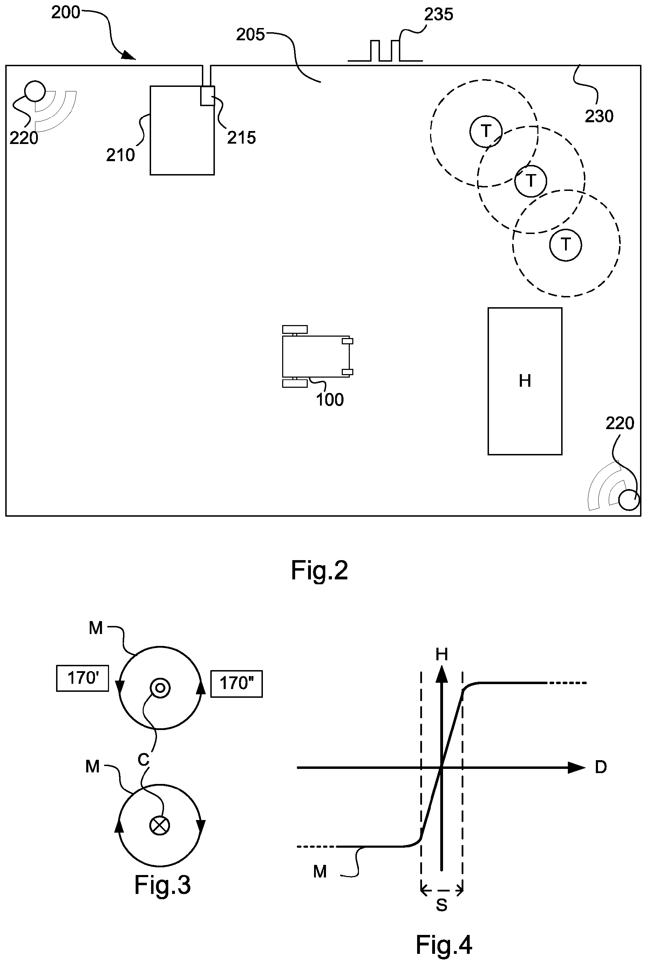

Figure 1A shows a perspective view of a robotic working tool 100, here exemplified by a robotic lawnmower 100, having a body 140 and a plurality of wheels 130 (only one shown). The robotic lawnmower 100 may comprise charging skids for contacting contact plates (not shown in figure 1) when docking into a charging station (not shown in figure 1, but referenced 210 in figure 2) for receiving a charging current through, and possibly also for transferring information by means of electrical communication between the charging station and the robotic lawnmower 100.

Figure 1B shows a schematic overview of the robotic working tool 100 according to present invention, also exemplified here by a robotic lawnmower 100. In this example the robotic lawnmower 100 is of an articulated or multi-chassis design, having a main or first body part 140-1 and a trailing or second body part 140-2. The two parts are connected by a joint part 140-3. The robotic lawnmower 100 also has plurality of wheels 130. In the exemplary embodiment of figure 1B the robotic lawnmower 100 has four wheels 130. The main body 140-1 is arranged with two front wheels 130-1 and the trailing body 140-2 is arranged with two rear wheels 130-2. At least some of the wheels 130 are drivably connected to at least one electric motor 150. It should be noted that even if the description herein is focused on electric motors, combustion engines may alternatively be used, possibly in combination with an electric motor. In the example of figure 1B, each of the front wheels 130-1 is connected to a respective electric motor 150. This allows for driving the wheels 130-1 independently of one another which, for example, enables steep turning.

In one embodiment, the wheels 130-2 of the trailing body part 140-2 are uncontrolled or free, wherein the trailing body part 140-2 may be rotated relative the main body part 140-1 through an actuator or rotator 145 in the joint part 140-3. The rotator 145 is in one embodiment comprised of a motor and a gearing system.

In one embodiment, the wheels 130-2 of the trailing body part 140-2 are controlled (for example through a motor), wherein the trailing body part 140-2 may be rotated relative the main body part 140-1 through controlling the wheels 130-2 of the trailing part 140-2.

These are merely two examples of how one body part may be rotated. However, many different variations exist for enabling one body part to rotate relative another body part as a skilled person would realize.

In one embodiment, the joint part 140-3 and/or the trailing part 140-2 is arranged with an angle determining unit 147 for determining the angle between the main part 140-1 and the trailing part 140-2.

In the example embodiment shown in figure 1B, the rotator 145 and the unit 147 are shown as arranged in the joint part 140-3 for rotating (and determining an angle for) the trailing part 140-2 relative the joint part 140-3. It should be noted that the rotator 145 and the unit 147 may alternatively or additionally (for a double jointed embodiment) be arranged for rotating (and determining an angle for) the main part 140-1 relative the joint part 140-3.

Figure 1C shows a schematic overview of the robotic working tool 100, also exemplified here by a robotic lawnmower 100. In this example embodiment the robotic lawnmower 100 is of a mono-chassis type, having a main body part 140. The main body part 140 substantially houses all components of the robotic lawnmower 100. The robotic lawnmower 100 has a plurality of wheels 130. In the exemplary embodiment of figure 1B the robotic lawnmower 100 has four wheels 130, two front wheels and two rear wheels. At least some of the wheels 130 are drivably connected to at least one electric motor 150. It should be noted that even if the description herein is focused on electric motors, combustion engines may alternatively be used, possibly in combination with an electric motor. In the example of figure 1B, each of the wheels 130 is connected to a respective electric motor. This allows for driving the wheels 130 independently of one another which, for example, enables steep turning and rotating around a geometrical center for the robotic lawnmower 100. It should be noted though that not all wheels need be connected to each a motor, but the robotic lawnmower 100 may be arranged to be navigated in different manners, for example by sharing one or several motors 150. In an embodiment where motors are shared, a gearing system may be used for providing the power to the respective wheels and for rotating the wheels in different directions. In some embodiments, one or several wheels may be uncontrolled and thus simply react to the movement of the robotic lawnmower 100.

In the following components common to the embodiments of figures 1B and 1C will be described with simultaneous reference to figures 1B and 1C.

The robotic lawnmower 100 also comprises a grass cutting device 160, such as a rotating blade 160 driven by a cutter motor 165. The grass cutting device being an example of a work tool 160 for a robotic work tool 100. The robotic lawnmower 100 also has (at least) one battery 155 for providing power to the motors 150 and/or the cutter motor 165.

The robotic lawnmower 100 also comprises a controller 110 and a computer readable storage medium or memory 120. The controller 110 may be implemented using instructions that enable hardware functionality, for example, by using executable computer program instructions in a general-purpose or special-purpose processor that may be stored on the memory 120 to be executed by such a processor. The controller 110 is configured to read instructions from the memory 120 and execute these instructions to control the operation of the robotic lawnmower 100 including, but not being limited to, the propulsion of the robotic lawnmower. The controller 110 may be implemented using any suitable, available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

The robotic lawnmower 100 may further be arranged with a wireless communication interface 115 for communicating with other devices, such as a server, a personal computer or smartphone, or the charging station. Examples of such wireless communication devices are Bluetooth^{®}, Global System Mobile (GSM) and LTE (Long Term Evolution), to name a few.

For enabling the robotic lawnmower 100 to navigate with reference to a boundary cable emitting a magnetic field caused by a control signal transmitted through the boundary cable, the robotic lawnmower 100 may be further configured to have at least one magnetic field sensor 170 arranged to detect the magnetic field (not shown) and for detecting the boundary cable and/or for receiving (and possibly also sending) information from a signal generator (will be discussed with reference to figure 2). In some embodiments, the sensors 170 may be connected to the controller 110, and the controller 110 may be configured to process and evaluate any signals received from the sensors 170. The sensor signals are caused by the magnetic field being generated by the control signal being transmitted through the boundary cable. This enables the controller 110 to determine whether the robotic lawnmower 100 is close to or crossing the boundary cable, or inside or outside an area enclosed by the boundary cable.

It should be noted that the magnetic field sensor(s) 170 as well as the boundary cable (referenced 230 in figure 2) and any signal generator(s) (referenced 215 in figure 2) are optional. The boundary cable may alternatively be used as the main and only perimeter marker. The boundary cable may alternatively simply be used as an additional safety measure. The boundary cable may alternatively be used as the main perimeter marker and other navigation sensors (see below) are used for more detailed or advanced operation.

In one embodiment, the robotic lawnmower 100 may further comprise at least one beacon receiver or beacon navigation sensor 175. The beacon receiver may be a Radio Frequency receiver, such as an Ultra Wide Band (UWB) receiver or sensor, configured to receive signals from a Radio Frequency beacon, such as a UWB beacon. The beacon receiver may be an optical receiver configured to receive signals from an optical beacon.

The magnetic field sensor 170 and the beacon sensor 175 are both examples of navigation sensors for receiving or sensing a control signal.

In one embodiment the beacon navigation sensor 175 is a satellite navigation sensor, such as a GPS receiver (Global Positioning System), the satellite taking the role of the beacon.

Figure 2 shows a schematic view of a robotic working tool system 200 in one embodiment. The schematic view is not to scale. The robotic working tool system 200 comprises a charging station 210 having a signal generator 215 and a robotic working tool 100. As with figures 1A, 1B and 1C, the robotic working tool is exemplified by a robotic lawnmower, whereby the robotic work tool system may be a robotic lawnmower system or a system comprising a combinations of robotic work tools, one being a robotic lawnmower, but the teachings herein may also be applied to other robotic working tools adapted to operate within a work area.

The robotic working tool system 220 may also comprise a boundary cable 230 arranged to enclose a work area 205, in which the robotic lawnmower 100 is supposed to serve. A control signal 235 is transmitted through the boundary cable 230 causing a magnetic field (not shown) to be emitted.

In one embodiment the control signal 235 is a sinusoid periodic current signal. In one embodiment the control signal 235 is a pulsed current signal comprising a periodic train of pulses. In one embodiment the control signal 235 is a coded signal, such as a CDMA signal.

For the purpose of this application a signal will be considered to be lost when the magnetic field caused by the control signal can no longer be sensed by the robotic work tool's sensor(s) 170 or when synchronization to the signal cannot be achieved. The control signal may not be completely lost, but if it cannot be received reliably, such that a synchronization can be achieved or that it is indistinguishable from noise, other signals or interference, it is considered lost for practical purposes. The control signal may also be regarded to be lost if it is not possible to reliably detect it due to internal interference (for example caused by the electric motors), interference caused by metallic object in the ground or other surroundings.

The robotic working tool system 220 may also optionally comprise at least one beacon 220 to enable the robotic lawnmower to navigate the work area using the beacon navigation sensor(s) 175.

The work area 205 is in this application exemplified as a garden, but can also be other work areas as would be understood. The garden contains a number of obstacles (O), exemplified herein by a number (3) of trees (T) and a house structure (H). The trees are marked both with respect to their trunks (filled lines) and the extension of their foliage (dashed lines).

As an electrical signal that varies in time is transmitted through a cable, such as the control signal 235 being transmitted through the boundary cable 230, a magnetic field is generated. The amplitude of the magnetic field is proportional to the amplitude of the control signal and how quickly the electrical signal varies. A large variation (fast and/or of great magnitude) results in a high amplitude for the magnetic field. The polarity of the magnetic field depends on the direction of the control signal. Figure 3 shows a schematic view of a cable C and a magnetic field M and how the direction of the magnetic field M depends on the direction of the control signal as it is transmitted through the cable C. In the upper side of figure 3, the control signal is transmitted through the cable C out of the figure (towards the viewer). In the lower side of figure 3, the control signal is transmitted through the cable C into the figure (away from the viewer). The resulting magnetic field is directed anti-clock wise in the upper side of figure 3, and clock wise in the lower side of figure 3.

This means that the polarity of the magnetic field M will differ depending on which side of the cable C an observer or sensor is. For example, a sensor 171' measuring the vertical component of the magnetic field on the left side of the cable C in the upper side of the figure will sense a magnetic field M having a negative polarity, whereas a sensor 170" on the right side of the cable C in the upper part of figure 3, will sense the same magnetic field M but as having a positive polarity. This polarity change enables a robotic lawnmower to determine which side of the cable C the sensor 170 is.

Figure 4 shows a graph of the amplitude of the magnetic field M (measured in the unit Henry H) as it depends on the distance (D) to the cable. As a magnetic field sensor comes close to the center of the cable, the vertical component of the magnetic field will make a polarity shift, which results in an abrupt change in amplitude of the magnetic signal M. Close to the boundary cable, the magnetic field will thus be close to zero (0) H and thus be difficult to detect, at least to reliably detect. This area is referred to as the polarity reversal area, indicated S in figure 4.

As has been noted in the above, the problem of "temporarily" losing a signal is different and depends on the type of sensor used. The problem of losing or not being able to reliably detect the magnetic field in the polarity reversal area is as such not the only example of a situation where the control signal may be lost and regained utilizing the teachings of this application.

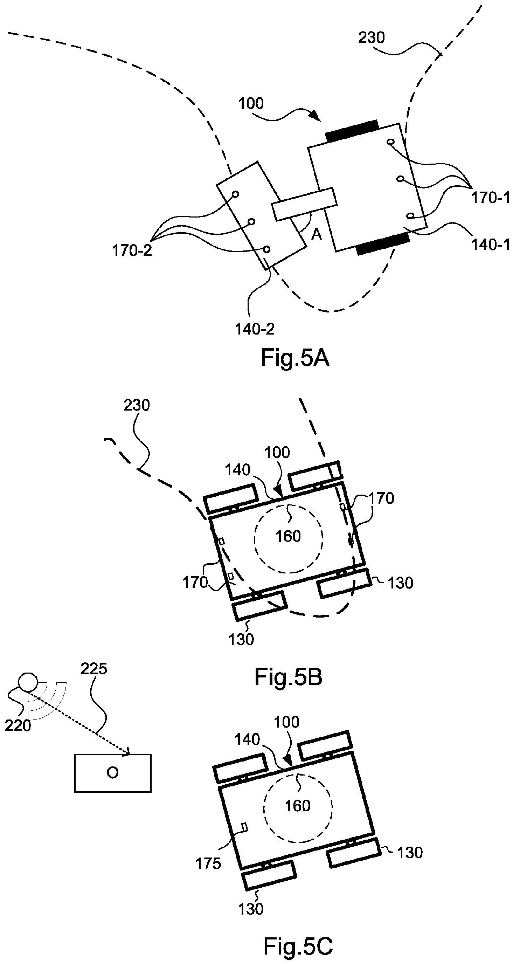

A problem solution that may arise according to the realization of the inventors will be discussed in relation to figures 5A, 5B and 5C. The number of sensors given in each figure and the placement of the sensors are only one example out of many and should not be construed to be limiting.

Figure 5A shows a schematic view of an example embodiment of a robotic work tool in relation to a boundary wire 230. The robotic work tool 100 in this example is a multi-chassis robotic lawnmower 100, adapted according to the teachings herein, such as the one in figure 1A and1B. As can be seen in figure 5A, all the robotic lawnmower's magnetic field sensors 170 are in close proximity to the boundary cable. All sensors 170 are thus in the so-called polarity reversal area where a signal may not be reliably received or sensed. This applies to both the sensors 170-1 in the main part 140-1 and the sensors 170-2 in the trailing part 140-2.

Figure 5B shows a schematic view of an example of a robotic work tool in relation to a boundary wire 230. The robotic work tool 100 in this example is a mono-chassis robotic lawnmower 100, adapted according to the teachings herein, such as the one in figure 1A and1C. As can be seen in figure 5B, all the robotic lawnmower's magnetic field sensors 170 are in close proximity to the boundary cable 230. All sensors 170 are thus in the so-called polarity reversal area where a signal may not be reliably received or sensed.

Figure 5C shows a schematic view of an example of a robotic work tool in relation to a beacon 220. The robotic work tool 100 in this example is a mono-chassis robotic lawnmower 100, adapted according to the teachings herein, such as the one in figure 1A and1C, however, the teachings in relation to this example applies equally to a multi-chassis robotic lawnmower as in figure 1B. As an alternative or an additional (supplemental) navigation sensor, the robotic lawnmower 100 of figure 5C is arranged with a beacon navigation sensor 175. Even though only the beacon navigation sensor 175 is shown in figure 5C, the robotic lawnmower 100 may additionally be arranged with magnetic navigation sensors as in figures 5A or 5B. As can be seen in figure 5C, the beacon signal 225 (indicated by the dashed straight arrow) from the beacon 220 is blocked by an obstacle O. The robotic lawnmower 100 is thus - in this example - not able to receive the control signal 225 reliably and the control signal is deemed to be lost.

The three figures 5A, 5B and 5C illustrates different problem situations where a control signal (235, 225) is lost or not reliably received, i.e. the robotic lawnmower has failed in retaining the signal. As a consequence of not being able to receive (or synchronize to) a signal reliably, the robotic lawnmower 100 will determine that the control signal is lost, and then cease its operation by halting its movement and turning of the grass cutter 160 according to the requirements of the safety standard(s).

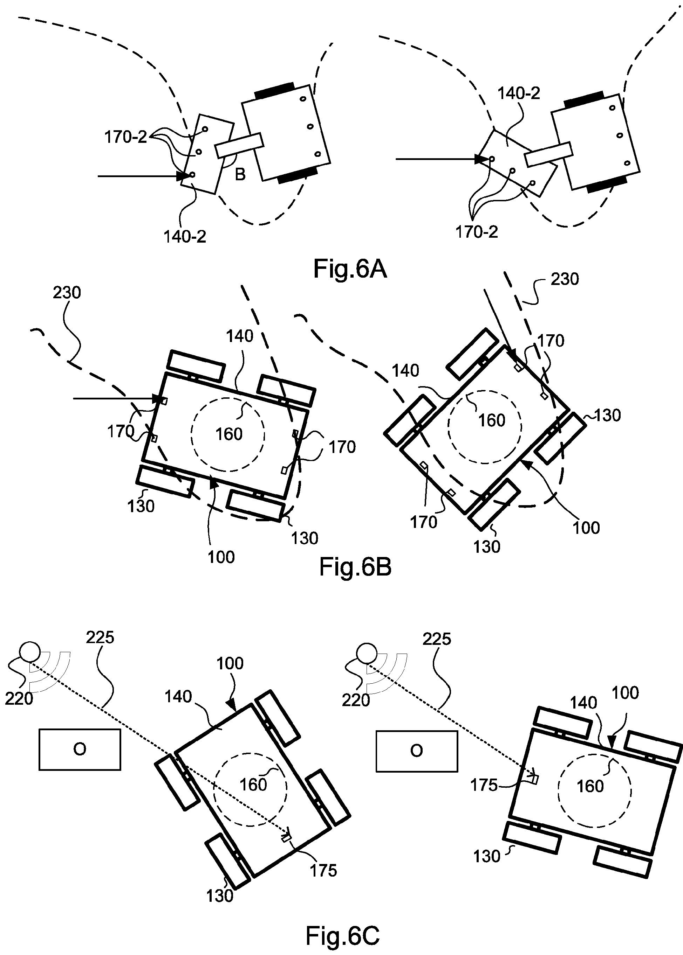

The situations of figure 5A, 5B and 5C are handled and may be solved and offer a reliable signal reception in similar manners as will be discussed in relation to figure 6A, 6B and 6C below.

The inventors have realized that the meaning of the safety standards is to protect against unwanted damage caused by the robotic lawnmower escaping the work area while operational and therefore mandates that the robotic lawnmower stop moving as in propelling across the work area and deactivate the grass cutter. However, the inventors have realized that in this context to stop moving means to cease all traversing movements and especially to stop moving the grass cutter in addition to deactivating the cutter blades. A rotation, especially one that does not substantially shift the center of the grass cutter, would not go against the spirit of the safety standards. The inventors are therefore providing a robotic lawnmower 100 that in order to retain the control signal rotates at least one body part carrying a sensor 170/175. By rotating a body part carrying a sensor 170/175, the sensor will effectively be moved to another position, without moving the position of the grass cutter, and may regain and retain the control signal 225/235. Especially for a magnetic field sensor, a small movement may be sufficient to regain the control signal as the polarity reversal area is of a size measuring a few centimeters, usually 1-15 cm depending on many factors such as signal strength, depth of the cable, composition of the soil and various other factors.

Figure 6A shows a schematic view of an example embodiment of a robotic work tool 100 in relation to a boundary wire 230, wherein the robotic lawnmower 100 has overcome the problem situation in figure 5A. As the robotic lawnmower 100 determines that the control signal (235) emanating from the boundary cable 230 is lost, the robotic lawnmower 100 rotates the trailing part 140-2. As the trailing part is rotated, the robotic lawnmower 100 is configured to stop propelling itself across the work area and/or at least discontinue all translative movement of the grass cutter 160. As the grass cutter 160 is located in the main part 140-1, the grass cutter is not moved, even if the trailing part is rotated, the robotic lawnmower 100 thereby adhering to the safety standards. The robotic lawnmower 100 may refrain from propelling itself in a translatory manner across the work area until the control signal reception is once again deemed reliable.

In the left side of figure 6A, the trailing part 140-2 has been rotated clockwise, whereby at least one sensor 170-2 (indicated by the arrow) is at larger distance from the boundary wire and thus probably out of the polarity reversal area. In the right side of figure 6A, the trailing part 140-2 has been rotated anti clockwise, whereby at least one sensor 170-2 (indicated by the arrow) is at larger distance from the boundary wire and thus probably out of the polarity reversal area.

It should be noted that even though the example shows rotating the trailing part 140-2, in one embodiment the main part 140-1 may also be arranged to be rotated, provided the center of the grass cutter is not substantially moved. The robotic lawnmower 100 is thus configured to stop and/or at least discontinue all translative movement of the grass cutter 160 and only rotate the grass cutter 160 and thereby adheres to the safety standards. As a sensor is moved out of the polarity reversal area, the signal may be regained and retained by the robotic lawnmower which may continue its operation without manual supervision.

The robotic lawnmower 100 may rotate the trailing part 140-2 utilizing the rotator 145 and/or by controlling the wheels 130-2 of the trailing part 140-2 depending on the embodiment of the robotic lawnmower 100.

In one embodiment the trailing part 140-2 is rotated by rotating around a movable connection between the trailing part 140-2 and the joining part 140-3.

In one embodiment the trailing part 140-2 is rotated or moved by rotating or moving around a movable connection between the main part 140-1 and the joining part 140-3. In such an embodiment, the trailing part may be moved in relation to the main part. As the trailing part 140-2 does not carry a grass cutter, the trailing part may be moved in any pattern, i.e. be rotated or subjected to a translative movement, without breaking the safety standards.

Figure 6B shows a schematic view of an example of a robotic work tool 100 in relation to a boundary wire 230, wherein the robotic lawnmower 100 has overcome the problem situation in figure 5B. As the robotic lawnmower 100 determines that the control signal (235) emanating from the boundary cable 230 is lost, the robotic lawnmower 100 stops and then rotates the body 140. As the grass cutter 160 is located substantially in or at least close to the center of the body 140, the grass cutter 160 is not shifted (substantially), only rotated. The robotic lawnmower 100 is thus configured to stop and/or at least discontinue all translative movement of the grass cutter 160 and then only rotate the body around the grass cutter 160 and thereby adheres to the safety standards.

In the left side of figure 6B, the body 140 has been rotated clockwise, whereby at least one sensor 170 (indicated by the arrow) is at larger distance from the boundary wire and thus probably out of the polarity reversal area. In the right side of figure 6B, the body 140 has been rotated anti clockwise, whereby at least one sensor 170 (indicated by the arrow) is at larger distance from the boundary wire and thus probably out of the polarity reversal area. As a sensor is moved out of the polarity reversal area, the signal may be regained and retained by the robotic lawnmower which may continue its operation without manual supervision.

The robotic lawnmower 100 may rotate the body 140 by controlling one or more of the wheels 130.

Figure 6C shows a schematic view of an example of a robotic work tool 100 in relation to a beacon 220, wherein the robotic lawnmower 100 has overcome the problem situation in figure 5C. As the robotic lawnmower 100 determines that the control signal (225) emanating from the beacon 220 is lost, the robotic lawnmower 100 rotates the body 140. As the grass cutter 160 is located substantially in or at least close to the center of the body 140, the grass cutter 160 is not shifted (substantially), only rotated. The robotic lawnmower 100 thereby adheres to the safety standards.

In the left side of figure 6C, the body 140 has been rotated clockwise, whereby at least one sensor 175 (indicated by the arrow) is no longer blocked by the obstacle O. In the right side of figure 6B, the body 140 has been rotated anti clockwise, whereby at least one sensor 175 (indicated by the arrow) is no longer blocked by the obstacle. As a sensor is no longer blocked by the obstacle O, the signal 225 may be regained and retained by the robotic lawnmower 100 which may continue its operation without manual supervision.

As for the robotic lawnmower of figure 5C, the teachings relating to figure 6C apply also to multi-chassis robotic lawnmowers, rotating the trailing part 140-2 instead of the body 140.

The robotic lawnmower 100 may rotate the trailing part 140-2 utilizing the rotator 145 and/or by controlling the wheels 130-2 of the trailing part 140-2 or alternatively the robotic lawnmower 100 may rotate the body 140 by controlling one or more of the wheels 130 depending on the embodiment of the robotic lawnmower 100.

The figures 6A, 6B and 6C shows that the robotic lawnmower 100 may be able to rotate in more than one direction to attempt regain reliable reception of the control signal. In one embodiment, the robotic lawnmower is configured to rotate in a first direction to attempt regain reliable reception of the control signal. If the control signal is not successfully regained within a time period and/or an angle of rotation, the robotic lawnmower may be arranged to rotate in a second direction to attempt regain reliable reception of the control signal.

In one embodiment, the robotic lawnmower is arranged to wait a time period before rotating to enable internal interference to die off.

Either time period is in one embodiment 5, 10 or 15 seconds. The time period is in one embodiment 1-5, 5-10, 10-15, or 1-20 seconds

The rotation angle is in one embodiment 15, 20 or 25 degrees. The rotation angle is in one embodiment 1-15, 15-20, 20-25, or 1-30 degrees.

If the control signal is not successfully regained, the robotic lawnmower 100 may reattempt the rotation and increasing the time period for rotating and/or the angle of rotation.

The time period is in one embodiment increased by 1-5, 5-10 or 10-15 seconds.

The rotation angle is in one embodiment increased by 1-15, 15-20 or 20-25 degrees.

The reattempt may be in the first direction and/or in the second direction.

In one embodiment the first direction is clock wise. In one embodiment the first direction is anti-clock wise. In one embodiment, the second direction is a direction opposite the first direction.

For a robotic lawnmower having several body parts that are movable relative one another, the robotic lawnmower 100 is, in one embodiment, configured to reattempt to regain the control signal by rotating a different body part than the one first rotated. The number of body parts that can be rotated, depends on the driving mechanism of the robotic lawnmower, and in particular for the body part. In one embodiment a rotator, such as the rotator 145 is needed to rotate a body part. In another or additional embodiment at least one wheel is driven in such a manner as the body part is rotated. A rotation may for example be achieved by driving opposing wheels in opposite directions.

In one embodiment the first direction is selected based on a current angle of the body part relative a maximum angle. For example if the current angle is close to a maximum angle, the robotic lawnmower 100 selects the first direction to be away from the maximum angle. One such example is when the trailing part is almost rotated as much s possible in one direction, whereby the robotic lawnmower selects to rotate the trailing part in the other direction.

In one direction the robotic lawnmower 100 selects the first direction to be in a direction which allows for the maximum rotation.

For an robotic lawnmower operating with a coded control signal (such as a CDMA signal) to which the synchronization is lost, even though the control signal itself can be sensed, the robotic lawnmower 100 is in one embodiment configured to establish the synchronization using the sensor 170/175 that regains the control signal, and communicates information regarding the synchronization to one or more of the other sensors 170/175. In one embodiment, such information regarding the synchronization comprises an indication of the timing of the synchronization. This enables also the other sensors to regain the control signal and retain it even without having to be moved also in cases where the signal may be faint. As more than one sensor may then be used, more advanced navigation of the robotic lawnmower 100 is thus enabled. This is particularly useful for navigation based on magnetic field sensors 170.

Returning to figure 1B showing a multi-chassis robotic lawnmower 100. In an embodiment where the robotic lawnmower 100 is arranged to determine a rotation angle of the trailing part 140-2 relative the main part 140-1 (possibly via an angle relative the joint part 140-3) using the angle determining unit 147, the robotic lawnmower 100 is further arranged to determine a first angle and based on the first angle determine a current pose of the robotic lawnmower 100, and based on the pose of the robotic lawnmower 100 determine a movement pattern for escaping the position where the sensor(s) 170 is not able to receive the control signal reliably, i.e. to remove the robotic lawnmower 100 from the boundary cable 230 without ending up in a position where the control signal is again lost. In one such embodiment, the first angle is the angle of the pose held by the robotic lawnmower 100 when the robotic lawnmower 100 lost the control signal. In this embodiment, the robotic lawnmower 100 is also configured to determine a second angle being the angle of the pose held by the robotic lawnmower 100 when the robotic lawnmower 100 the control signal is regained. By comparing the first and the second angles, the robotic lawnmower 100 is able to determine at least a portion of the boundary cable's location and/or extension. The robotic lawnmower 100 may thus determine where the polarity reversal area is and thereby determine how to manoeuvre the robotic lawnmower 100 so that the/all sensor(/s) do not end up in the polarity reversal area again, thereby enabling the robotic lawnmower to remove itself from the boundary cable.

The first and second angles are marked in figures 5A and 6A and referenced 'A' and 'B' respectively.

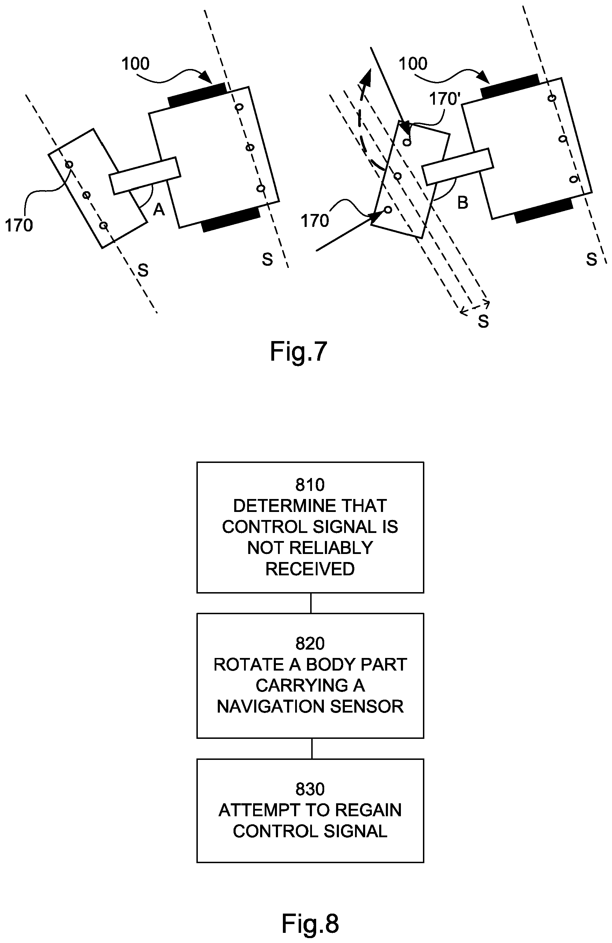

Figure 7 shows a schematic view of an example where the robotic lawnmower 100 is configured to determine angles for the trailing part 140-2 relative the main part 140-1 and based on this determine a manner for how to manoeuvre away from the polarity reversal area and the boundary cable 230. As part of determining the manner of manoeuvring, the extent and/or location of the polarity reversal area is determined based on the angle (such as the first angle A) and the knowledge that the robotic lawnmower has about the arrangement of its sensor(s) 170.

As can be seen in the left side of figure 7, an estimated polarity reversal area may be determined simply on the angle A and the knowledge of the sensor arrangement. In the left side of figure 7, the estimation of the polarity reversal area is indicated by a centreline for the polarity reversal area referenced S.

As a second angle B is determined, it is possible to determine the extent of the polarity reversal area S (as indicated by border lines for the polarity reversal area in the right side of figure 7) based on the knowledge of the arrangement of the sensor(s), the second angle B and which sensor(s) that regains the control signal (indicated by the black arrows in right side of figure 7).

Based on the knowledge of the location and possibly also the extent of the polarity reversal area S, a manner of manoeuvring away from the boundary cable 230 without all sensors ending up in the polarity reversal area again, thereby losing the signal, may be determined. As indicated in the right side of figure 7 by a dashed bold arrow, the robotic lawnmower 100 may reverse keeping the current angle B which will remove the robotic lawnmower 100 from the boundary cable, without at least the upper sensor referenced 170' ending up in the polarity reversal area S. The angle B should be decreased as the robotic lawnmower 100 reverses. The exact manner of determining the manner of manoeuvring depends on the capabilities of the robotic lawnmower and as there are many variations possible it is beyond the scope of the application to present details in this regard and it should be noted that a person skilled in robotic manoeuvring would realize how to implement such a determination for a specific robotic lawnmower 100.

With regards to rotating the robotic lawnmower in such a manner that the grass cutter is not substantially shifted or moved, this is achieved if the center of the grass cutter 160 (coinciding with the location of the motor 165 in figures 1B and 1C) substantially coincides or overlaps with the rotational center of the body part rotating. In one embodiment the center of rotation and the center of the grass cutter are said to overlap if they are within a distance ratio of one another. The distance ratio is in one embodiment based on the size of the corresponding body part. In one such embodiment the distance ratio is 5, 10 or 5-10 % of the size of the body part. The distance ratio is in one embodiment based on the size of the grass cutter. In one such embodiment the distance ratio is 5, 10, 15, 20, 5-10, 10-15 or 15-20 % of the size of the grass cutter.

As a skilled person would understand the center of rotation of a robotic lawnmower depends on the driving mechanism of the robotic lawnmower and will vary depending on for example location of the wheels, which wheels are driven, and how the wheels are driven with respect to one another to name a few factors.

The teaching of determining a manner of manoeuvring may also be applied to a mono-chassis robotic lawnmower where the angle(s) corresponds to rotation angle(s) for the body 140. The teaching of determining the angle(s) based on the rotation of the relevant body part, may also be applied to multi-chassis robotic lawnmowers 100 not equipped with specific rotation determining units 147. In such embodiments, the rotation determining unit 147, may be seen to be a sensor for deduced reckoning thereby enabling the robotic lawnmower 100 to determine a rotation angle by for example counting wheel turns, querying a compass or an accelerometer.

Figure 8 shows a flowchart of a general method according to the teachings herein. The robotic lawnmower 100 determining 810 that said control signal 225, 235 is not reliably received and in response thereto rotating (or moving) 820 at least one of the at least one body part 140, 140-1, 140-2, 140-3 comprising at least one of the at least one navigation sensor 170, 175 in a first direction for attempting 830 to regain reliable reception of the control signal 225, 235.

## Claims

1. A robotic work tool (100) comprising a cutting device (160), a first body part (140-1), a second body part (140-2) and at least one navigation sensor (170, 175) being configured to receive a control signal (225, 235), wherein at least one of the at least one navigation sensor (170, 175) is arranged on the second body part (140-2) and the cutting device (160) is arranged on the first body part (140-1), the robotic work tool (100) being **characterised in that** it is configured to
rotate the second body part (140-2) in relation to the first body part (140-1),
determine that said control signal (225, 235) is not reliably received and in response thereto
rotate the second body part (140-2) in a first direction to
attempt to regain reliable reception of the control signal (225, 235).

2. The robotic work tool (100) according to claim 1, wherein the robotic work tool (100) is further configured to
rotate the second body part (140-2) in a first direction;
determine that reliable reception is not regained and in response thereto
rotate the second body part (140-2) in a second direction to attempt to regain reliable reception of the control signal (225, 235).

3. The robotic work tool (100) according to any preceding claim, wherein the robotic work tool (100) is further configured to stop propelling itself prior to rotating the second body part (140-2).

4. The robotic work tool (100) according to any preceding claim, wherein the robotic work tool (100) is further configured to refrain from propelling itself in a translatory manner until reliable reception of the control signal (225, 235) has been regained.

5. The robotic work tool (100) according to any preceding claim, wherein the robotic work tool (100) is further configured to
determine that reliable reception is not regained within a time period and/or a rotation angle and in response thereto
rotate the second body part (140-2) for an extended time period and/or angle to attempt to regain reliable reception of the control signal (225, 235).

6. The robotic work tool (100) according to any preceding claim, wherein the robotic work tool (100) is further configured to
determine that reliable reception is regained for one of the at least one navigation sensor (170, 175) and in response thereto communicate synchronization information to the other of the at least one navigation sensor (170, 175).

7. The robotic work tool (100) according to any preceding claim, further comprising an angle determining unit (147), wherein the robotic work tool (100) is further configured to determine an angle of rotation (A,B) for the second body part (140-2) utilizing the angle determining unit (147) and based on the angle of rotation (A,B) determine a manner of maneuvering the robotic work tool (100).

8. The robotic work tool (100) according to any preceding claim, wherein at least one of the at least one navigation sensor is a magnetic field sensor (170).

9. The robotic work tool (100)(100) according to preceding claim 8, wherein the robotic work tool (100) is configured to operate in a robotic work tool system (200) comprising a boundary cable (230) and a signal generator (215) for transmitting the control signal (235) through said boundary cable (230) and wherein said control signal is not reliably received in a polarity reversal area for the boundary cable (230).

10. The robotic work tool (100) according to claims 8 and 9, wherein the robotic work tool (100) is further configured to determine an estimate of the polarity reversal area (S) and determine the manner of maneuvering the robotic work tool (100) so that the at least one magnetic field sensor regaining the control signal does not enter the estimated polarity reversal area (S).

11. The robotic work tool (100) according to any preceding claim, wherein at least one of the at least one navigation sensor is a beacon receiver (175) and
wherein the robotic work tool (100) is configured to operate in a robotic work tool system (200) comprising a beacon (220) for transmitting the control signal (225) to said beacon receiver (175).

## Patentansprüche

1. Roboterarbeitswerkzeug (100), umfassend eine Schneidvorrichtung (160), ein erstes Körperteil (140-1), ein zweites Körperteil (140-2) und mindestens einen Navigationssensor (170, 175), der konfiguriert ist, um ein Steuersignal (225, 235) zu empfangen, wobei mindestens einer des mindestens einen Navigationssensors (170, 175) an dem zweiten Körperteil (140-2) angeordnet ist und die Schneidvorrichtung (160) an dem ersten Körperteil (140-1) angeordnet ist, wobei das Roboterarbeitswerkzeug (100) **dadurch gekennzeichnet ist, dass** es konfiguriert ist, um das zweite Körperteil (140-2) in Bezug auf das erste Körperteil (140-1) zu drehen,
Bestimmen, dass das Steuersignal (225, 235) nicht zuverlässig empfangen wird, und als Reaktion darauf
Drehen des zweiten Körperteils (140-2) in eine erste Richtung,
um zu versuchen, einen zuverlässigen Empfang des Steuersignals (225, 235) wiederherzustellen.

2. Roboterarbeitswerkzeug (100) nach Anspruch 1, wobei das Roboterarbeitswerkzeug (100) ferner konfiguriert ist zum
Drehen des zweiten Körperteils (140-2) in eine erste Richtung;
Bestimmen, dass der zuverlässige Empfang nicht wiederhergestellt ist und als Reaktion darauf
Drehen des zweiten Körperteils (140-2) in eine zweite Richtung, um zu versuchen, den zuverlässigen Empfang des Steuersignals (225, 235) wiederherzustellen.

3. Roboterarbeitswerkzeug (100) nach einem der vorstehenden Ansprüche, wobei das Roboterarbeitswerkzeug (100) ferner konfiguriert ist, um aufzuhören, sich selbst anzutreiben, bevor es das zweite Körperteil (140-2) dreht.

4. Roboterarbeitswerkzeug (100) nach einem der vorstehenden Ansprüche, wobei das Roboterarbeitswerkzeug (100) ferner konfiguriert ist, um davon abzusehen, sich selbst auf translatorische Art und Weise anzutreiben, bis der zuverlässige Empfang des Steuersignals (225, 235) wiederhergestellt ist.

5. Roboterarbeitswerkzeug (100) nach einem der vorstehenden Ansprüche, wobei das Roboterarbeitswerkzeug (100) ferner konfiguriert ist zum
Bestimmen, dass der zuverlässige Empfang innerhalb einer Zeitspanne und/oder eines Drehwinkels nicht wiederhergestellt ist, und als Reaktion darauf
Drehen des zweiten Körperteils (140-2) für eine verlängerte Zeitspanne und/oder einen verlängerten Winkel, um zu versuchen, den zuverlässigen Empfang des Steuersignals (225, 235) wiederherzustellen.

6. Roboterarbeitswerkzeug (100) nach einem der vorstehenden Ansprüche, wobei das Roboterarbeitswerkzeug (100) ferner konfiguriert ist zum
Bestimmen, dass für einen des mindestens einen Navigationssensors (170, 175) der zuverlässige Empfang wiederhergestellt ist, und als Reaktion darauf Kommunizieren von Synchronisierungsinformationen an den anderen des mindestens einen Navigationssensors (170, 175).

7. Roboterarbeitswerkzeug (100) nach einem der vorstehenden Ansprüche, ferner umfassend eine Winkelbestimmungseinheit (147), wobei das Roboterarbeitswerkzeug (100) ferner konfiguriert ist, um unter Verwendung der Winkelbestimmungseinheit (147) einen Drehwinkel (A, B) für das zweite Körperteil (140-2) zu bestimmen und basierend auf dem Drehwinkel (A, B) eine Art und Weise zum Manövrieren des Roboterarbeitswerkzeugs (100) zu bestimmen.

8. Roboterarbeitswerkzeug (100) nach einem der vorstehenden Ansprüche, wobei mindestens einer des mindestens einen Navigationssensors ein Magnetfeldsensor (170) ist.

9. Roboterarbeitswerkzeug (100) nach dem vorstehenden Anspruch 8, wobei das Roboterarbeitswerkzeug (100) konfiguriert ist, um in einem Roboterarbeitswerkzeugsystem (200) betrieben zu werden, umfassend ein Begrenzungskabel (230) und einen Signalgenerator (215) zum Übertragen des Steuersignals (235) durch das Begrenzungskabel (230), und wobei das Steuersignal in einem Polaritätsumkehrbereich für das Begrenzungskabel (230) nicht zuverlässig empfangen wird.

10. Roboterarbeitswerkzeug (100) nach den Ansprüchen 8 und 9, wobei das Roboterarbeitswerkzeug (100) ferner konfiguriert ist, um eine Schätzung des Polaritätsumkehrbereichs (S) zu bestimmen und die Art und Weise des Manövrierens des Roboterarbeitswerkzeugs (100) zu bestimmen, sodass der mindestens eine Magnetfeldsensor, der das Steuersignal wiederherstellt, nicht in den geschätzten Polaritätsumkehrbereich (S) eintritt.

11. Roboterarbeitswerkzeug (100) nach einem der vorstehenden Ansprüche, wobei mindestens einer des mindestens einen Navigationssensors ein Bakenempfänger (175) ist, und
wobei das Roboterarbeitswerkzeug (100) konfiguriert ist, um in einem Roboterarbeitswerkzeugsystem (200) betrieben zu werden, umfassend eine Bake (220) zum Übertragen des Steuersignals (225) an den Bakenempfänger (175).

## Revendications

1. Outil de travail robotisé (100) comprenant un dispositif de coupe (160), une première partie de corps (140-1), une seconde partie de corps (140-2) et au moins un capteur de navigation (170, 175) configuré pour recevoir un signal de commande (225, 235), dans lequel au moins l'un parmi au moins un capteur de navigation (170, 175) est disposé sur la seconde partie de corps (140-2) et le dispositif de coupe (160) est disposé sur la première partie de corps (140-1), l'outil de travail robotisé (100) étant **caractérisé en ce qu'**il est configuré pour faire tourner la seconde partie de corps (140-2) par rapport à la première partie de corps (140-1 ),
déterminer que ledit signal de commande (225, 235) n'est pas reçu de manière fiable et, en réponse à cela
faire tourner la seconde partie de corps (140-2) dans une première direction pour tenter de rétablir une réception fiable du signal de commande (225, 235).

2. Outil de travail robotisé (100) selon la revendication 1, dans lequel l'outil de travail robotisé (100) est en outre configuré pour
faire tourner la seconde partie de corps (140-2) dans une première direction ;
déterminer que la réception fiable n'est pas rétablie et, en réponse à cela
faire tourner la seconde partie de corps (140-2) dans une seconde direction pour tenter de rétablir une réception fiable du signal de commande (225, 235).

3. Outil de travail robotisé (100) selon l'une quelconque revendication précédente, dans lequel l'outil de travail robotisé (100) est en outre configuré pour arrêter de se propulser avant de faire tourner la seconde partie de corps (140-2).

4. Outil de travail robotisé (100) selon l'une quelconque revendication précédente, dans lequel l'outil de travail robotisé (100) est en outre conçu pour s'abstenir de se propulser de manière translatoire jusqu'à ce qu'une réception fiable du signal de commande (225, 235) ait été rétablie.

5. Outil de travail robotisé (100) selon l'une quelconque revendication précédente, dans lequel l'outil de travail robotisé (100) est en outre configuré pour
déterminer qu'une réception fiable n'est pas rétablie dans une période de temps et/ou un angle de rotation, et en réponse à cela
faire tourner la seconde partie de corps (140-2) pendant une période de temps et/ou un angle prolongés pour tenter de rétablir une réception fiable du signal de commande (225, 235).

6. Outil de travail robotisé (100) selon l'une quelconque revendication précédente, dans lequel l'outil de travail robotisé (100) est en outre configuré pour
déterminer qu'une réception fiable est rétablie pour un de l'au moins un capteur de navigation (170, 175) et, en réponse à cela, communiquer des informations de synchronisation à l'autre de l'au moins un capteur de navigation (170, 175).

7. Outil de travail robotisé (100) selon l'une quelconque revendication précédente, comprenant en outre une unité de détermination d'angle (147), dans lequel l'outil de travail robotisé (100) est en outre configuré pour déterminer un angle de rotation (A, B) pour la seconde partie de corps (140-2) en utilisant l'unité de détermination d'angle (147) et, sur la base de l'angle de rotation (A, B), déterminer une manière de manoeuvrer l'outil de travail robotisé (100).

8. Outil de travail robotisé (100) selon l'une quelconque revendication précédente, dans lequel au moins l'un parmi au moins un capteur de navigation est un capteur de champ magnétique (170).

9. Outil de travail robotisé (100) selon la revendication 8 précédente, dans lequel l'outil de travail robotisé (100) est configuré pour fonctionner dans un système d'outil de travail robotisé (200) comprenant un câble périphérique (230) et un générateur de signal (215) pour transmettre le signal de commande (235) à travers ledit câble périphérique (230) et dans lequel ledit signal de commande n'est pas reçu de manière fiable dans une zone d'inversion de polarité pour le câble périphérique (230).

10. Outil de travail robotisé (100) selon les revendications 8 et 9, dans lequel l'outil de travail robotisé (100) est en outre configuré pour déterminer une estimation de la zone d'inversion de polarité (S) et déterminer la manière de manoeuvrer l'outil de travail robotisé (100) de sorte que l'au moins un capteur de champ magnétique rétablissant le signal de commande n'entre pas dans la zone d'inversion de polarité estimée (S).

11. Outil de travail robotisé (100) selon l'une quelconque revendication précédente, dans lequel au moins l'un parmi l'au moins un capteur de navigation est un récepteur de signaux de balise (175) et
dans lequel l'outil de travail robotisé (100) est configuré pour fonctionner dans un système d'outil de travail robotisé (200) comprenant une balise (220) pour transmettre le signal de commande (225) audit récepteur de signaux de balise (175).
